# EUROPEAN PATENT APPLICATION

(11) **EP 4 227 885 A1**
(43) Date of publication of application: **16.08.2023**
(21) Application number: 21880339.3
(22) Date of filing: 17.09.2021
(51) Int. Cl.: G06Q 50/26, G06Q 50/30, G06K 19/06, H04M 1/72403

(54) **METHOD FOR PROVIDING GROUP-SPECIFIC RESIDENT SERVICE TO GROUP MEMBERS BY USING QR CODE AUTHENTICATION**

(30) Priority: 12.10.2020 KR 20200131518
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2021/012914
(87) International publication number: WO 2022/080691

(57) **Abstract**

A method for providing a group-specific resident service to group members by using QR code authentication is proposed. In the proposed method, residents may easily use various resident services such as notice checks of a group they belong to, complaint reception, resident opinion collection, and resident voting through authentication of an apartment or administrative district they belong to merely by scanning a QR code without providing sensitive personal information, and a manager in charge of an apartment management office or administrative district may easily and quickly deliver and communicate notification without separately managing paper notices or announcement broadcasts, thereby increasing work efficiency.

## Description

### Technical Field

The present disclosure relates to a method for providing a group-specific resident service and, more particularly, to a method for providing a group-specific resident service to group members by using QR code authentication.

### Background Art

Despite the rapid development of new technologies such as the Internet and artificial intelligence, in general, conventional methods are still applied to sharing information or collecting suggestions for multi-unit dwellings such as apartments. That is, in disseminating notices, paper-printed notices are attached to a wall inside or around an elevator, or announcement broadcasts from an apartment management office and the like are mainly used, and when there are any complaints or suggestions, a method of directly placing a phone call to the apartment management office by a resident is still in use to solve the complaints or suggestions.

However, the method of using paper notices is not only a burden for management, but also a problem for residents who live on lower floors and do not use elevators, being readily alienated from the paper notices. Further, as more and more people use stairs of apartments for the purpose of exercise and disease prevention, there is a problem that residents may miss important notices. In addition, there are many cases in which announcement broadcasts are made during the daytime on weekdays, so there are inconveniences that residents with jobs are likely to be excluded from listening to the announcement broadcasts, and the residents' rest may also be disrupted due to the announcement broadcasts.

Meanwhile, in multi-unit dwellings such as apartments, various guide information may be disseminated using paper notices or announcement broadcasts, but as for notification to be delivered to residents at community centers and the like in administrative districts such as eup (i.e., town), myeon (i.e., township), and dong (i.e., village), delivering the notification has no proper way except for the method of using mails, thereby causing a problem of lack of communication and inefficiency.

In order to solve such problems, an apartment community system (Korean Patent Application Publication No. 10-2002-0025267) has been disclosed. In this system, a homepage having an integrated environment is provided for each apartment complex, and an independent cyber space is provided for each resident household, so that on the Internet, residents may be able to easily obtain information on the apartment complex where the residents live or information on other apartment complexes.

However, since such embodiment of the disclosure focuses on sharing information between residents, there is a problem that the number of participants is limited as in an offline neighborhood meeting. In addition, an apartment management office is excluded from the participation, so announcement broadcasts, paper-notice boards, or the like, which are operated by the apartment management office or the like, are still operated in parallel with the apartment community system, and moreover, targets for the apartment community system are merely apartments, whereby there is a limit to using the apartment community system as a communication channel between community centers and residents.

Meanwhile, even when the apartment community system or the like is operated, it is not easy to activate such a community system because the residents are reluctant to provide their detailed personal information. Therefore, it is required to develop services that the residents may easily use without disclosing their detailed personal information.

### Disclosure

### Technical Problem

The present disclosure is proposed to solve the above-described problems of the previously proposed methods, and an objective of the present disclosure is to provide a method for providing a group-specific resident service for group members by using QR code authentication, wherein residents may easily use various resident services such as notice checks of a group they belong to, complaint reception, resident opinion collection, and resident voting through authentication of an apartment or administrative district they belong to merely by scanning a QR code without providing sensitive personal information, and a manager in charge of an apartment management office or administrative district may easily and quickly deliver and communicate notification without separately managing paper notices or announcement broadcasts, thereby increasing work efficiency.

### Technical Solution

According to the configurational features of the present disclosure for achieving the above objective, there is provided a method for providing a group-specific resident service for group members by using QR code authentication,

the method being performed by a service server configured to provide the group-specific resident service for each resident group whose members are residents of a predetermined range according to an apartment complex or an administrative district and including:
(1) generating, for each resident group, a QR code for authentication provided to a resident household so as to authenticate group membership thereof;
(2) receiving scan information from a resident device that has scans the QR code provided for each resident household and authenticating resident group membership corresponding to the QR code by using the received scan information; and
(3) providing the group-specific resident service to be provided to a resident group by using a resident application (hereinafter, referred to as "app") of the resident device when the authentication is successful.

Preferably, the group-specific resident service
may target the group members belonging to each resident group, and may include at least one selected from a group including providing notices provided by a manager of an apartment or government office, complaint reception, resident opinion collection, and resident voting.

Preferably, in between step (1) and step (2),
a step of providing the QR code generated in step (1) may be further included.

More preferably, step (1.5)
may be configured to provide the QR code to a printout editing device or a printing device so as to print and provide the generated QR code on a printout to be provided to each resident household.

More preferably, step (1.5)
may be configured to provide the generated QR code to an in-house device installed in each resident household.

Preferably, step (1)
may be configured to generate, for each resident household, the QR code for the authentication provided to the resident household so as to authenticate household membership and the group membership, and
step (2)
may be configured to authenticate the resident group membership and the corresponding household membership, which correspond to the QR code, by using the scan information received from the resident device that has scanned the QR code.

Preferably, step (2) may further include:
(2-1) authenticating the resident group membership corresponding to the QR code by using the scan information received from the resident device;
(2-2) requesting residents' household information from the resident device; and
(2-3) authenticating the corresponding household membership by using the household information received as an input at the request of step (2-2).

Preferably, step (2)
may be configured to perform the authentication through the resident app of the resident device and connect to an installation link of the resident app when the resident app is not installed in the resident device.

### Advantageous Effects

According to the method for providing the group-specific resident service to the group members by using the QR code authentication, the method being proposed in the present disclosure, there is provided an effect that residents may easily use various resident services such as notice checks of a group they belong to, complaint reception, resident opinion collection, and resident voting through authentication of an apartment or administrative district they belong to merely by scanning a QR code without providing sensitive personal information, and a manager in charge of an apartment management office or administrative district may easily and quickly deliver and communicate notification without separately managing paper notices or announcement broadcasts, thereby increasing work efficiency.

### Description of Drawings

FIG. 1 is a view illustrating a system configuration for implementing a method for providing a group-specific resident service to group members by using QR code authentication according to an exemplary embodiment of the present disclosure.
FIG. 2 is a flowchart illustrating the method for providing the group-specific resident service to the group members by using the QR code authentication according to the exemplary embodiment of the present disclosure.
FIG. 3 is a view illustrating a QR code, as an example, generated for each resident group in step S100 of the method for providing the group-specific resident service to the group members by using the QR code authentication according to the exemplary embodiment of the present disclosure.
FIG. 4 is a view illustrating, as an example, a shape of a QR code provided to an in-house device in step S150 of the method for providing the group-specific resident service to the group members by using the QR code authentication according to the exemplary embodiment of the present disclosure.
FIG. 5 is a view illustrating, as an example, a shape of a QR code provided on a printout in the method for providing the group-specific resident service to the group members by using the QR code authentication according to the exemplary embodiment of the present disclosure.
FIG. 6 is a view illustrating, as an example, a shape of a resident device that succeeds in the QR code authentication and is provided with the group-specific resident service in the method for providing the group-specific resident service to the group members by using the QR code authentication according to the exemplary embodiment of the present disclosure.
FIG. 7 is a view illustrating generation of the QR code for authentication in order to obtain the authentication for each resident household in the method for providing the group-specific resident service to the group members by using the QR code authentication according to the exemplary embodiment of the present disclosure.
FIG. 8 is a view illustrating a detailed flow of step S200 of performing resident group authentication and household authentication in the method for providing the group-specific resident service to the group members by using the QR code authentication according to the exemplary embodiment of the present disclosure.
FIG. 9 is a view illustrating a shape of providing the household authentication and a household-specific resident service in the method for providing the group-specific resident service to the group members by using the QR code authentication according to the exemplary embodiment of the present disclosure.

### <Description of the Reference Numerals in the Drawings>

100: service server
200: resident device
210: resident app
300: manager device
S100: generating, for each resident group, QR code for authentication provided to resident household so as to authenticate group membership
S150: providing generated QR code
S200: receiving scan information from resident device that has scanned QR code provided for each resident household, and authenticating resident group membership corresponding to QR code by using received scan information
S210: authenticating resident group membership corresponding to QR code by using scan information received from resident device
S220: requesting resident household information from resident device
S230: authenticating corresponding household membership by using input household information
S300: providing group-specific resident service to be provided to resident group by using resident app of resident device when authentication is successful

### Best Mode

Hereinafter, preferred exemplary embodiments will be described in detail with reference to the drawings accompanied in this specification so that those skilled in the art may easily implement the present disclosure. However, in the following detailed description of the preferred exemplary embodiment of the present disclosure, it is to be noted that, when the detailed description of a related known function or configuration may unnecessarily obscure the subject matter of the present disclosure, the detailed description thereof will be omitted. In addition, the same reference numerals are used throughout the drawings for parts having similar functions and actions.

In addition, throughout the specification, when a part is said to be "connected" to another part, an expression such as "connected" is intended to include not only "directly connected" but also "indirectly connected" having a different component in the middle thereof. In addition, unless the context clearly indicates otherwise, it will be further understood that the terms "comprises", "comprising", "includes", and/or "including" specify the presence of other components, but do not preclude the presence or addition of one or more other components thereof.

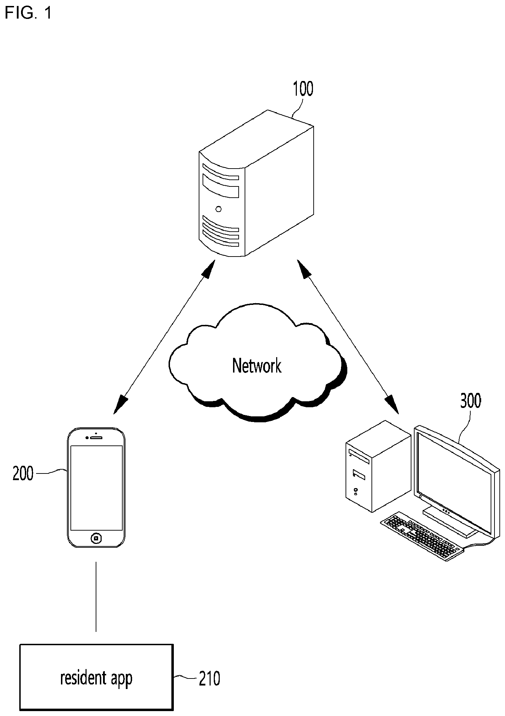

FIG. 1 is a view illustrating a system configuration for implementing a method for providing a group-specific resident service to group members by using QR code authentication according to an exemplary embodiment of the present disclosure. As shown in FIG. 1, a system for implementing the method for providing the group-specific resident service to the group members by using the QR code authentication according to the exemplary embodiment of the present disclosure may be configured to include: a service server 100, a resident device 200, and a manager device 300.

The service server 100 may provide a group-specific resident service for each resident group whose group members are residents within a range predetermined according to an apartment complex or an administrative district. Here, the resident group may be a group whose group members are residents residing in a specific apartment complex, a group whose group members are residents residing in a specific eup, myeon, or dong of an administrative district, and the like. According to exemplary embodiments, even just one apartment complex, residents of the apartment complex may be divided into a plurality of groups as required.

Meanwhile, the group-specific resident service targets group members belonging to each resident group, and may include at least one selected from a group including providing notices provided by a manager of an apartment or government office, complaint reception, resident opinion collection, and resident voting. That is, in addition to providing simple notices, the group-specific resident service may also include serving as a means of communication, such as receiving complaints or suggestions and receiving information on processing status thereof. However, when specific household information such as the resident voting is required, household authentication is allowed to be additionally performed, so that when the household authentication is completed, a household-specific resident service including the resident voting may be further provided through the resident app.

To this end, the service server 100 may allow access of the resident device 200 and the manager device 300 through a network, and transmit and receive various signals and data. Here, the network may be implemented by: a wired network such as a Local Area Network (LAN), a Wide Area Network (WAN), or a Value Added Network (VAN); or all kinds of wireless networks such as a Mobile Radio Communication Network, a Satellite Network, Bluetooth, Wireless Broadband Internet (WIBRO), High Speed Downlink Packet Access (HSDPA), Long-Term Evolution (LTE), and 5th Generation Mobile Telecommunication (5G).

The resident device 200 may be a terminal of a resident using a group-specific resident service. More specifically, the resident device 200 may scan a QR code and transmit scan information to the service server 100, so as to obtain authentication for group membership, and may receive the group-specific resident service from the service server 100. The resident device 200 installs and runs the resident app 210, and may provide various interfaces required for the resident app 210 to obtain authentication through QR code scanning and to use the group-specific resident service.

The manager device 300 may be a terminal of a manager who is in charge of complaint reception or notices targeting residents at an apartment management office or a government office such as a community center. More specifically, the manager may access the service server 100 with the manager device 300, post the notices or the like targeting a resident group in charge, and check and handle complaints and the like received from members of the resident group in charge.

Here, each of the resident device 200 and manager device 300 may be implemented with an electronic device. The electronic device may include at least one of the following devices: a smartphones, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, or a wearable device. The wearable device may have at least one of the following types of devices: an accessory type (e.g., a watch, a ring, a bracelet, an anklet, a necklace, glasses, a contact lens, or a head-mounted device (HMD)), a textile or garment integral type (e.g., an electronic garment), a body-worn type (e.g., a skin pad or a tattoo), and a bio-implantable circuit type. In various exemplary embodiments, the electronic device is not limited to the devices described above, and may be a combination of two or more of the various devices described above.

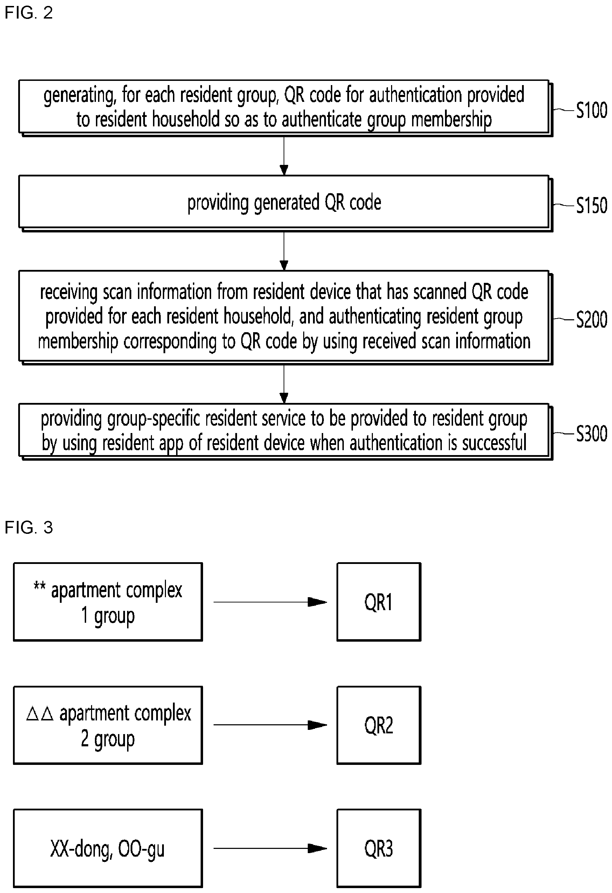

FIG. 2 is a flowchart illustrating the method for providing the group-specific resident service to the group members by using the QR code authentication according to the exemplary embodiment of the present disclosure. As shown in FIG. 2, the method for providing the group-specific resident service to the group members by using the QR code authentication according to the exemplary embodiment of the present disclosure may be implemented to include: step S100 of generating, for each resident group, a QR code for authentication provided to a resident household so as to authenticate group membership thereof; step S200 of receiving scan information from a resident device 200 that has scan the QR code provided for each resident household and authenticating resident group membership corresponding to the QR code by using the received scan information; and step S300 of providing a group-specific resident service to be provided to a resident group by using a resident app 210 of the resident device 200 when the authentication is successful, and may be implemented to further include step S150 of providing the generated QR code in between step S100 and step S200.

The method for providing the group-specific resident service to the group members by using the QR code authentication according to the features of the present disclosure may be implemented by the service server 100, and may be configured with software recorded in hardware including a memory and a processor. For example, the method for providing the group-specific resident service to the group members by using the QR code authentication may be stored and implemented in a personal computer, a laptop computer, a server computer, a PDA, a smart phone, a tablet PC, and the like. Hereinafter, for convenience of description, a main agent for performing each step may be omitted.

In step S100, the service server 100 may generate, for each resident group, a QR code for authentication provided to a resident household so as to authenticate group membership thereof. That is, the QR code generated in step S100 is for authenticating group membership of a resident group, and stores information of the corresponding resident group, and may be different for each resident group.

FIG. 3 is a view illustrating a QR code, as an example, generated for each resident group in step S100 of the method for providing the group-specific resident service to the group members by using the QR code authentication according to the exemplary embodiment of the present disclosure. As shown in FIG. 3, in step S100 of the method for providing the group-specific resident service to the group members by using the QR code authentication according to the exemplary embodiment of the present disclosure, a resident group is organized according to a specific apartment complex or a dong of an administrative district, and different QR codes for authentication may be generated for each resident group.

In step S150, the service server 100 may provide the QR code generated in step S100. In the present disclosure, since group membership is authenticated merely by scanning the QR code for authentication, the QR code may be provided in a way accessible for each resident group only. More specifically, in step S150, the QR code generated in step S100 may be provided to an in-house device installed in each resident household.

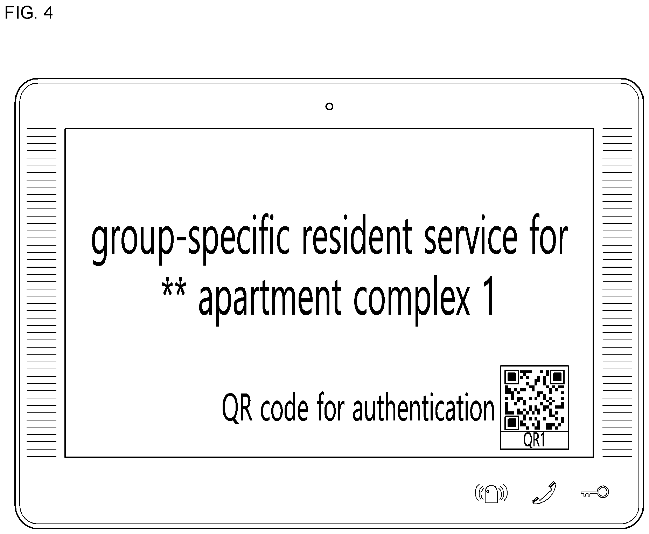

FIG. 4 is a view illustrating, as an example, a shape of a QR code provided to an in-house device in step S150 of the method for providing the group-specific resident service to the group members by using the QR code authentication according to the exemplary embodiment of the present disclosure. In each household of many apartments, a wall pad is installed, serving as an intercom and a means for CCTV check, energy usage check, etc. As shown in FIG. 4, in step S150 of the method for providing the group-specific resident service to the group members by using the QR code authentication according to the exemplary of the present disclosure, a QR code for authentication may be provided on the wall pad in each household. Since a person who accesses the wall pad within a household may be regarded as a member of the corresponding household, a resident who scans the QR code output on a display screen of the wall pad may be regarded as a group member.

In addition, other than the wall pad, in-house devices may be various, such as smart TVs or in-house signage (i.e., refrigerator signage, bathroom signage, telepresence robots, etc.), and are considered accessible only to members within each household. As long as it is a device to which the service server 100 is able to provide a QR code, the device may serve as an in-house device of the present disclosure regardless of the specific type of device.

Meanwhile, houses, villas, or the like often do not have the wall pads as shown in FIG. 4, and even apartments may not have such wall pads. For these cases, a QR code may be provided to a printout editing device or a printing device so that the QR code generated on a printout to be provided to each resident household is printed and provided. Here, the printout editing device or printing device may be a device connected to the manager device 300 or manager device 300, and a manager may print the QR code on the printout to provide the printout to each household.

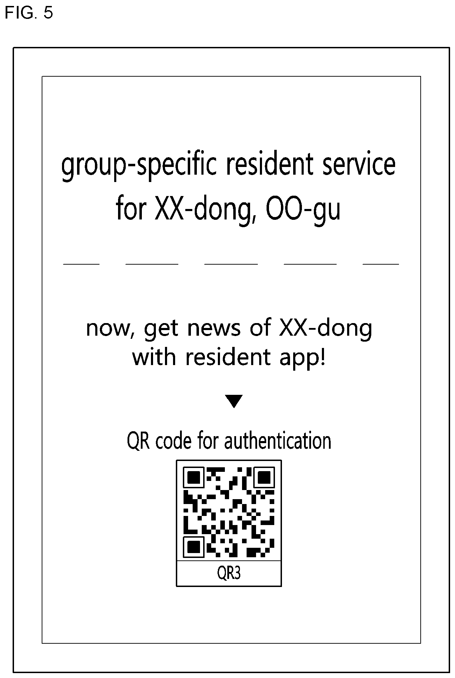

FIG. 5 is a view illustrating, as an example, a shape of a QR code provided on a printout in the method for providing the group-specific resident service to the group members by using the QR code authentication according to the exemplary embodiment of the present disclosure. As shown in FIG. 5, in step S150 of the method for providing the group-specific resident service to the group members by using the QR code authentication according to the exemplary of the present disclosure, a QR code for authentication may be provided to each household in the form of a printout having the QR code printed thereon. In particular, by providing the printout including the QR code in a sealed mail or in a way of inserting the printout inside the front entrance of each household, someone other than a member of the corresponding resident group may be prevented from stealing the QR code.

In step S200, the service server 100 may receive scan information from a resident device 200 that has scanned the QR code provided for each resident household, and authenticate resident group membership corresponding to the QR code by using the received scan information. In this case, the scan information obtained by scanning the QR code in step S200 may include information about a resident group stored in the QR code.

Meanwhile, the resident app 210 installed on the resident device 200 may be used to scan a QR code, but the resident app 210 may be implemented to be automatically executed when a QR code is scanned with a normal camera or the like. In addition, in step S200, authentication is performed through the resident app 210 of the resident device 200, and when the resident app 210 is not installed in the resident device 200, the resident device 200 may be connected to an installation link of the resident app 210.

In step S300, a group-specific resident service to be provided to a resident group by using the resident app 210 of the resident device 200 may be provided when the authentication is successful. Here, the group-specific resident service targets group members belonging to each resident group, and may include at least one selected from a group including providing notices provided by a manager of an apartment or government office, complaint reception, resident opinion collection, and resident voting.

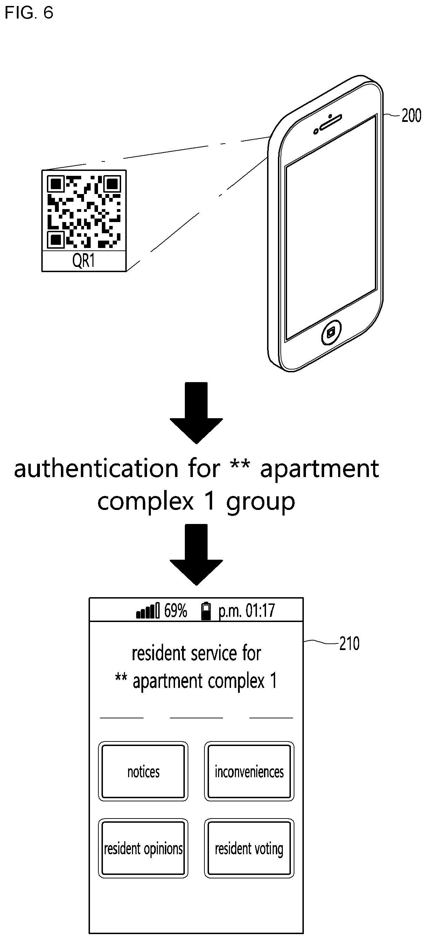

FIG. 6 is a view illustrating, as an example, a shape of a resident device that succeeds in the QR code authentication and is provided with the group-specific resident service in the method for providing the group-specific resident service to the group members by using the QR code authentication according to the exemplary embodiment of the present disclosure. As shown in FIG. 6, in the method for providing the group-specific resident service to the group members by using the QR code authentication according to the exemplary of the present disclosure, a resident who has been provided with a QR code for authentication via an in-house device or a printout may scan the QR code by using a resident device 200, so as to authenticate group membership of a resident group to which the corresponding resident belongs, as shown in FIG. 4 or 5. When the authentication is successful, the corresponding group's group-specific resident service provided by the resident app 210 installed and operated in the resident device 200 may be used. For example, by selecting a "Notice" menu that is output on the display screen of the resident device 200, a notice targeting the residents of "**Apartment Complex 1" may be checked. In addition, by selecting an "Inconveniences" menu, a suggestion regarding inconveniences, such as noise between floors and separate collection for recycling, may be raised without placing a direct call to a management office.

Meanwhile, among resident services, a service such as "resident voting", requiring authentication for each household, may be included. In such a household-specific resident service, merely authentication of a resident group is insufficient, and a little more specific information may be required. Hereinafter, a detailed description will be given about an authentication method for each household while requesting the providing of merely minimal information to a resident household.

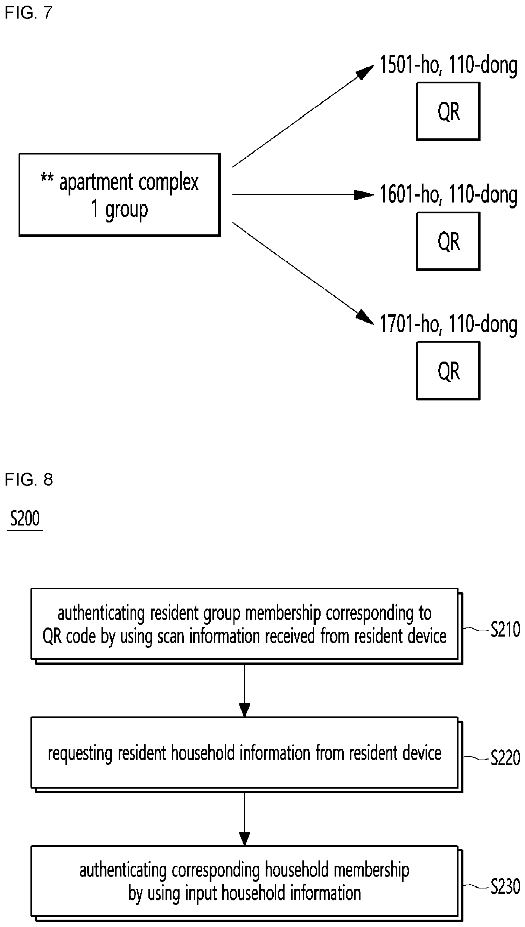

FIG. 7 is a view illustrating generation of the QR code for authentication in order to obtain the authentication for each resident household in the method for providing the group-specific resident service to the group members by using the QR code authentication according to the exemplary embodiment of the present disclosure. As shown in FIG. 7, in step S100 of the method for providing the group-specific resident service to the group members by using the QR code authentication according to the exemplary embodiment of the present disclosure, a QR code for authentication provided to each resident household so as to authenticate group membership and household membership may be generated for each resident household. In this case, information on each household as well as group information may be stored in the generated QR code for authentication, and the QR code for authentication may be generated differently for each household. In step S200, scan information (including the group information and household information) received from the resident device 200 that has scanned the QR code may be used to authenticate the resident group membership and the corresponding household membership, which correspond to the QR code.

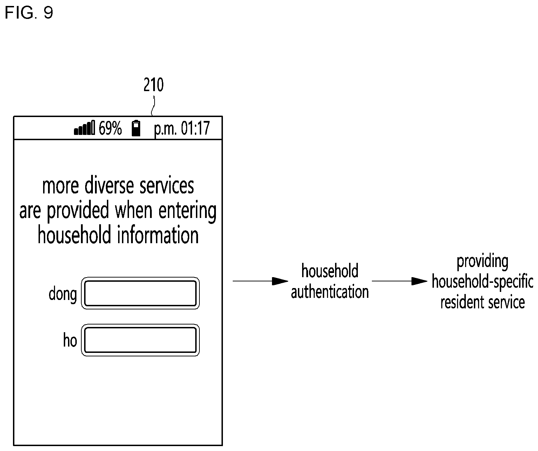

FIG. 8 is a view illustrating a detailed flow of step S200 of performing resident group authentication and household authentication in the method for providing the group-specific resident service to the group members by using the QR code authentication according to the exemplary embodiment of the present disclosure. FIG. 9 is a view illustrating a shape of providing the household authentication and a household-specific resident service in the method for providing the group-specific resident service to the group members by using the QR code authentication according to the exemplary embodiment of the present disclosure. That is, in the method for providing the group-specific resident service to the group members by using the QR code authentication according to the exemplary of the present disclosure, in order to authenticate a household, group membership is first authenticated and household information is requested from the resident device 200 for additional household-specific authentication, whereby the household may be authenticated using the household information.

More specifically, as shown in FIG. 8, step S200 of the method for providing the group-specific resident service to the group members by using the QR code authentication according to the exemplary of the present disclosure may be implemented to include: step S210 of authenticating resident group membership corresponding to the QR code by using the scan information received from the resident device 200; step S220 of requesting resident's' household information from the resident device 200; and step S230 of authenticating corresponding household membership by using the input household information. Hereinafter, steps S210 to S230 will be described in detail with reference to FIGS. 8 and 9.

In step S210, the service server 100 may use the scan information received from the resident device 200 to authenticate resident group membership corresponding to the QR code. Here, the scanned QR code may be generated for each resident group for group authentication as described in FIG. 3.

In step S220, the service server 100 may request residents' household information from the resident device 200. Here, the household information may be information that residents may easily input without receiving a feeling of being asked for excessive personal information, such as a household address, a householder's name, and a vehicle number registered in the corresponding household. For example, as shown in FIG. 9, by using the resident app 210 of the resident device 200, a household address such as dong and number in the case of an apartment, and a household address such as road name address, number, and the like in the case of a house or villa may be requested to be input as the household information.

In step S230, the service server 100 may authenticate the corresponding household membership by using the household information received as an input at the request of step S220. When the household membership is authenticated, the service server 100 may additionally provide a household-specific resident service, such as resident voting and the providing of a management fee bill, in addition to the group-specific resident service through the resident app 210 of the resident device 200 in step S300.

Meanwhile, steps S220 and S230 may be performed at a predetermined cycle so as to re-authenticate the household membership and check whether there is duplication or not. That is, since household members may be changed due to moving or the like, the household authentication may be performed at the predetermined cycle such as six months or one year. In addition, when duplicate authentication is performed for a specific household, the duplication may be checked to see if a non-resident stole the QR code for authentication.

As described above, according to the method for providing the group-specific resident service to the group members by using the QR code authentication, the method being proposed in the present disclosure, the residents may easily use various resident services such as notice checks of the group they belong to, complaint recepti on, resident opinion collection, and resident voting through authentication of an apartment or administrative district they belong to merely by scanning a QR code without providing sensitive personal information, and also a manager in charge of the apartment management office or administrative district may easily and quickly deliver and communicate notification without separately managing paper notices or announcement broadcasts, thereby increasing work efficiency.

Meanwhile, the present disclosure may include a computer-readable medium including program instructions for performing operations implemented in various communication terminals. For example, the computer-readable media may include hardware devices, which are specially configured to store and execute program instructions, the hardware devices including: magnetic media such as hard disks, floppy disks, and magnetic tapes; optical media such as CD-ROMs and DVDs; magnetooptical media such as floptical disks; and memories such as ROMs, RAMs, and flash memories.

The computer-readable media may include program instructions, data files, data structures, and the like individually or in combination. In this case, the program instructions recorded on the computer-readable media may be specially designed and configured to implement the embodiment of the present disclosure, or may be known and available to those skilled in the art of computer software. For example, the computer instructions may include not only machine language code such as one generated by a compiler, but also high-level language code executable by a computer using an interpreter or the like.

The present disclosure described above can be modified or applied in various ways by those skilled in the art to which the present disclosure pertains. The scope of the technical idea according to the present disclosure should be defined by the following claims.

## Claims

1. A method for providing a group-specific resident service for group members by using QR code authentication, the method being performed by a service server (100) configured to provide the group-specific resident service for each resident group whose members are residents of a predetermined range according to an apartment complex or an administrative district and comprising:
(1) generating, for each resident group, a QR code for authentication provided to a resident household so as to authenticate group membership thereof;
(1.5) providing the QR code generated in step (1) in a way accessible for each resident group only;
(2) receiving scan information from a resident device (200) that has scans the QR code provided for each resident household and authenticating resident group membership corresponding to the QR code by using the received scan information; and
(3) providing the group-specific resident service to be provided to a resident group by using a resident application (hereinafter, referred to as "app") of the resident device (200) when the authentication is successful,
wherein step (1) is configured to generate, for each resident household, the QR code for the authentication provided to the resident household so as to authenticate household membership and the group membership,
step (1.5) is configured to provide the generated QR code to an in-house device in a form of a wall pad installed in each resident household and provide the QR code to a printout editing device or a printing device so as to print and provide the generated QR code on a printout to be provided to each resident household for a resident household having no in-house device, thereby providing the printout comprising the QR code in a sealed form for each resident household,
step (2) is configured to authenticate the resident group membership and the corresponding household membership, which correspond to the QR code, by using the scan information received from the resident device (200) that has scanned the QR code,
step (2) further comprises:
(2-1) authenticating the resident group membership corresponding to the QR code by using the scan information received from the resident device (200);
(2-2) requesting residents' household information from the resident device (200); and
(2-3) authenticating the corresponding household membership by using the household information received as an input at the request of step (2-2),
step (3) is configured to additionally provide a household-specific resident service when the corresponding household membership is authenticated using the household information in step (2-3), and
step (2) is configured to perform the authentication through the resident app (210) of the resident device (200) and connect to an installation link of the resident app (210) when the resident app (210) is not installed in the resident device (200).

2. The method of claim 1, wherein the group-specific resident service targets the group members belonging to each resident group, and comprises at least one selected from a group comprising providing notices provided by a manager of an apartment or government office, complaint reception, resident opinion collection, and resident voting.
